(19) **Europäisches Patentamt**
**European Patent Office**
**Office européen des brevets**

(11) **EP 4 575 394 A1**

(12) **EUROPÄISCHE PATENTANMELDUNG**

(43) Veröffentlichungstag:
**25.06.2025 Patentblatt 2025/26**

(21) Anmeldenummer: **23218531.4**

(22) Anmeldetag: **20.12.2023**

(51) Internationale Patentklassifikation (IPC):
**G01C 15/00** (2006.01)    **E02F 9/26** (2006.01)
**G06T 7/80** (2017.01)    **G06V 20/56** (2022.01)

(52) Gemeinsame Patentklassifikation (CPC):
**G01C 15/00; G06V 20/10; E02F 9/264**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder: **Helmberger, Michael**
**6700 Bludenz (AT)**

(74) Vertreter: **Hilti Aktiengesellschaft**
**Corporate Intellectual Property**
**Feldkircherstrasse 100**
**Postfach 333**
**9494 Schaan (LI)**

(54) **POSITIONSMESSGERÄT, POSITIONSMESSSYSTEM, VERFAHREN ZUR POSITIONSMESSUNG UND COMPUTERPROGRAMMPRODUKT**

(57) Die Erfindung betrifft ein **Positionsmessgerät (10)** zur Messung einer Position (P) eines Objekts (12) auf einer Baustelle (14), beispielsweise einer Hochbau-Baustelle oder einer Tiefbau-Baustelle, umfassend wenigstens ein Kamera (16, 18, 20, 22, 24, 26), wobei das Positionsmessgerät (10) wenigstens ein Kamerapaar aus wenigstens zwei Kameras (16, 18, 20, 22, 24, 26) aufweist, und wobei es eingerichtet ist, einen Neigungswinkelfehler (NF) zwischen Kameras (16, 18, 20, 22, 24, 26) wenigstens eines Kamerapaars selbsttätig zu korrigieren und / oder herauszurechnen, insbesondere auf höchstens 0,3 Pixel zu begrenzen. Die Erfindung ermöglicht besonders kostengünstige und präzise Messungen von Positionen auf Baustellen.

Fig. 5

EP 4 575 394 A1

**Beschreibung**

Die Erfindung geht aus von einem Positionsmessgerät zur Messung einer Position eines Objekts auf einer Baustelle. Das Positionsmessgerät weist wenigstens eine Kamera auf. Solche Positionsmessgeräte, beispielsweise in Form von Totalstationen, werden auf Baustellen verwendet, um in Bauplänen eingezeichnete Positionen auf die Baustelle zu übertragen, um Positionen auf der Baustelle an korrespondierenden Positionen in den Bauplänen einzuzeichnen oder um Positionen auf der Baustelle mit korrespondierenden Positionen in den Bauplänen zu vergleichen.

Eine Totalstation weist in der Regel einen Laser-basierten Distanzmesser auf. Der Distanzmesser ist an hochauflösende Winkelsensoren gekoppelt. Seine Strahlrichtung ist einstellbar. Mit dem Distanzmesser kann man somit eine Zielposition auf der Baustelle anpeilen und die Distanz zu dieser Zielposition messen. Mithilfe der Winkelsensoren kann zugleich die Strahlrichtung des Lasers des Distanzmessers bestimmt werden. Damit kann die Zielposition relativ zu einem körpereigenen Koordinatensystem der Totalstation eingemessen werden.

Oftmals weisen Totalstationen auch eine Kamera auf. Die Kamera kann beispielsweise ein Teleobjektiv umfassen. Dann kann mit der Kamera die Zielposition beispielsweise in vergrößerter Darstellung betrachtet werden. Es kann überprüft werden, dass der Distanzmesser mit seinem Laserstrahl die Zielposition tatsächlich trifft.

Damit Koordinaten der Zielposition in einem von der Totalstation unabhängigen Koordinatensystemen, beispielsweise einem in dem Bauplan verwendeten Koordinatensystem, ermittelt werden können, muss die Totalstation separat anhand von auf der Baustelle eingemessenen Eichmarkierungen zunächst selbst eingemessen werden. Insbesondere muss eine Abbildung des körpereigenen Koordinatensystems der Totalstation auf das unabhängige Koordinatensystem bestimmt werden.

Üblicherweise können Messfehler bei der Messung von Positionen auf Baustellen von bis zu 5 mm akzeptiert werden. Damit diese Messfehlertoleranz durch die Totalstation eingehalten werden kann, müssen sehr hohe Genauigkeitsanforderungen an die Winkelsensoren sowie an die mechanische Stabilität der Totalstation insgesamt gestellt werden.

Durch die hohen Genauigkeitsanforderungen sind Totalstationen sehr teuer und aufwendig in der Herstellung.

Aufgabe der vorliegenden Erfindung ist es daher, Vorrichtungen und Verfahren anzubieten, die eine kostengünstige Möglichkeit zur präzisen Messung von Positionen auf Baustellen ermöglichen.

Gelöst wird die Aufgabe zunächst durch einen **Positionsmessgerät** zur Messung einer Position eines Objekts auf einer Baustelle, beispielsweise eine Hochbau-Baustelle oder einer Tiefbau-Baustelle, umfassend wenigstens eine Kamera, wobei das Positionsmessgerät wenigstens ein Kamerapaar aus wenigstens zwei Kameras aufweist, und wobei es eingerichtet ist, einen Neigungswinkelfehler zwischen Kameras wenigstens eines Kamerapaars selbsttätig zu korrigieren und / oder herauszurechnen, insbesondere auf höchstens 0,3 Pixel zu begrenzen.

Neigungswinkelfehler entsprechen relativen Verdrehungen einer Kamera eines Kamerapaars zu einer anderen Kamera des Kamerapaars um eine die beiden verbindende Achse, sodass die zwei Kameras des Kamerapaares durch ihre Sichtrichtungen und ihre Verbindungslinie unterschiedlich ausgerichtete Ebenen aufspannen.

Das Positionsmessgerät kann grundsätzlich eingerichtet sein, durch Auswerten von Bildern der Kameras die Position des Objekts zu bestimmen. Die Kameras können somit nicht nur dazu verwendet werden, eine vergrößerte Darstellung einer Zielregion einem Benutzer des Positionsmessgeräts darzubieten, sondern selbst Daten für die Positionsmessung zu liefern.

Dabei hat sich überraschenderweise in eigenen Versuchsreihen gezeigt, dass Neigungswinkelfehler bis zu einem bestimmten Ausmaß einen gesamten Messfehler, insbesondere kumulierte Messfehler aufgrund einer kumulierten Drift, nur geringfügig beeinflussen. Überschreiten jedoch die Neigungswinkelfehler einen bestimmten Schwellwert, so kann der Messfehler überproportional ansteigen.

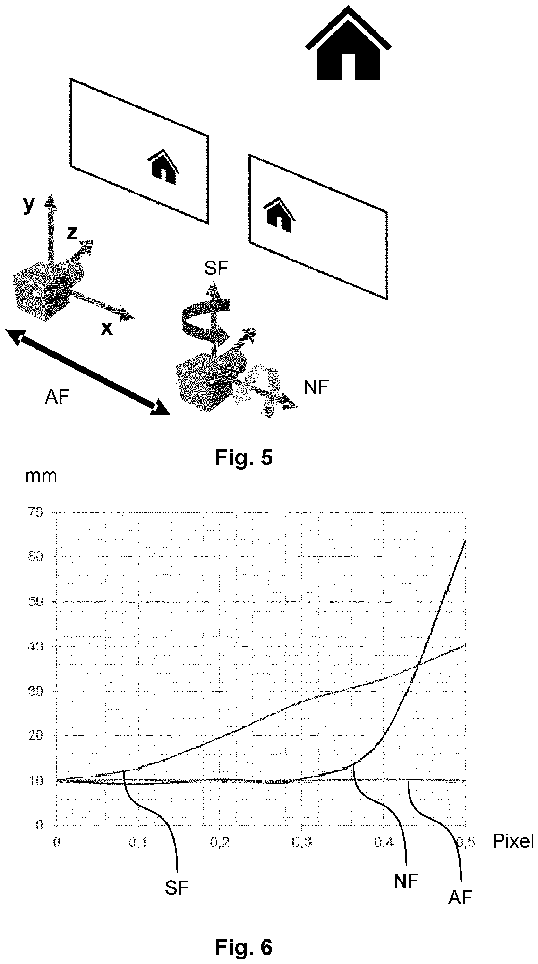

So ergab sich, wie noch weiter unten im Zusammenhang mit Fig. 6 näher erläutert werden wird, ein Neigungswinkelfehler-Schwellwert von circa 0,3 Pixel, ab denen sich Neigungswinkelfehler beträchtlich auswirkten. Eine Erhöhung des Neigungswinkelfehlers von 0,3 Pixeln auf 0,5 Pixel führte beispielsweise zu einer Versechsfachung des Fehlers, also der kumulierten Drift.

Für ein Sichtfeld mit einem Sichtwinkel von 90° für eine Kamera, dass in der Vertikalen beispielsweise auf 1536 Pixel abgebildet wird, entspricht ein Fehler von 0,3 Pixel einem Winkelfehler von

$$0,3 \text{ Pixel} \times 90° / 1536 \text{ Pixel} = \text{ca. } 0,018°.$$

Einer der Gründe hierfür kann darin liegen, dass beispielsweise SLAM-Verfahren häufig nur bis zu dem genannten Neigungswinkelfehler-Schwellwert in der Lage sind, zumindest einige der in den ausgewerteten Bildern der verschiedenen Kameras enthaltenen Elemente erfolgreich einander zuzuordnen.

Wenigstens eine der Kameras kann wenigstens 3 MP aufweisen. Unter einer Kamera mit 1 MP kann dabei eine Kamera verstanden werden, die einen Bildsensor mit wenigstens 1 Mio. Pixel, also Bildpunkten, umfasst. Dementsprechend weist eine Kamera mit 3 MP wenigstens 3 Mio. Pixel auf. Die wenigstens sechs Kameras weisen somit insgesamt wenigstens 18 Mio. Pixel auf.

Bei Farbbildkameras kann ein Pixel einem Tripelpunkt, also einer Gruppe von drei Sensoreinheiten des Bildsensors für die jeweils erfassten drei Farbkomponenten, beispielsweise für Rot, Grün und Blau, entsprechen. Bei Schwarz-Weiß-Kameras kann ein Pixel einer einzelnen Sensoreinheit entsprechen.

Die Kameras können ein Sichtfeld aufweisen, dass horizontal wenigstens 135°, insbesondere wenigstens 180° und besonders bevorzugt wenigstens 270° abdeckt. Das Sichtfeld kann vertikal wenigstens 90°, insbesondere wenigstens 135° und besonders bevorzugt wenigstens 170° abdecken. Die Sichtfelder der Kameras können sich wenigstens paarweise, insbesondere sowohl horizontal als auch vertikal, überlappen.

Wenigstens eine der Kameras, vorzugsweise alle Kameras, kann ein Bildformat entsprechend 3:2, 4:3, 5:4, 16:9 oder 16:10 aufweisen. Sie kann einem so genannten 4K-Standard oder einem höheren Standard, insbesondere wenigstens 8K, beispielsweise 16K, entsprechen. Ein höherer Standard geht mit einer höheren Anzahl von Sensoreinheiten einher. Eine höhere Anzahl von Sensoreinheiten wiederum ermöglicht in der Regel höhere Winkelauflösungen.

Denkbar ist insbesondere, dass es sich um wenigstens eine Schwarz-Weiß-Kamera handelt. Eine Schwarz-Weiß-Kamera kann kostengünstig eine hohe Pixelauflösung bieten.

Denkbar ist auch, dass wenigstens eine Kamera in einer Richtung erheblich mehr Pixel aufweist als in einer andere Richtung. Beispielsweise kann die Kamera horizontal wenigstens viermal so viele Pixel aufweisen wie vertikal. Die Kamera kann somit eine Zeilenkamera sein, die jedoch in begrenztem Umfang eine Auflösung in ihre zweiten Dimension bietet. Eine solche Kamera kann somit eine besonders hohe Winkelauflösung in wenigstens einer der beiden Dimensionen der ihres Bildsensors bieten. Auch kann eine solche Kamera in wenigstens einer der beiden Dimensionen ein sehr weites Sichtfeld und dennoch in dieser Dimension eine hinreichende Winkelauflösung bieten.

Der Erfindung liegt dabei unter anderem die überraschende Erkenntnis zugrunde, dass die Genauigkeit, mit der Positionen durch mehrere Kameras ermittelbar sind, sehr stark nichtlinear von der Anzahl der Kameras abhängen kann. Insbesondere gibt es einen Bereich für die Anzahl von Kameras, der zu einem Optimum zwischen der erzielbaren Genauigkeit und dem Herstellungsaufwand, den Bauteilkosten sowie dem Aufwand für Kalibrierungen führt.

Diese Erkenntnis sowie weitere Verbesserungen und Ausführungsbeispiele werden anhand der folgenden Figurenbeschreibung näher erläutert.

In der schematischen Zeichnung sind Ausführungsbeispiele der Erfindung dargestellt und in der nachfolgenden Beschreibung näher erläutert.

**Es zeigen:**

**Fig. 1** ein Positionsmessgerät in einer schematischen, perspektivischen Darstellung,

**Fig. 2** bis **Fig. 4** und **Fig. 6** Ergebnisse eigener Untersuchungsreihen,

**Fig. 5** wichtige Messfehlerquellen,

**Fig. 7** ein Positionsmesssystem mit einem Benutzer desselben und

**Fig. 8** ein Verfahren zur Messung einer Position auf einer Baustelle.

In der nachfolgenden Beschreibung der Figuren werden zur Erleichterung des Verständnisses der Erfindung für gleiche oder sich funktional entsprechende Elemente jeweils die gleichen Bezugszeichen verwendet.

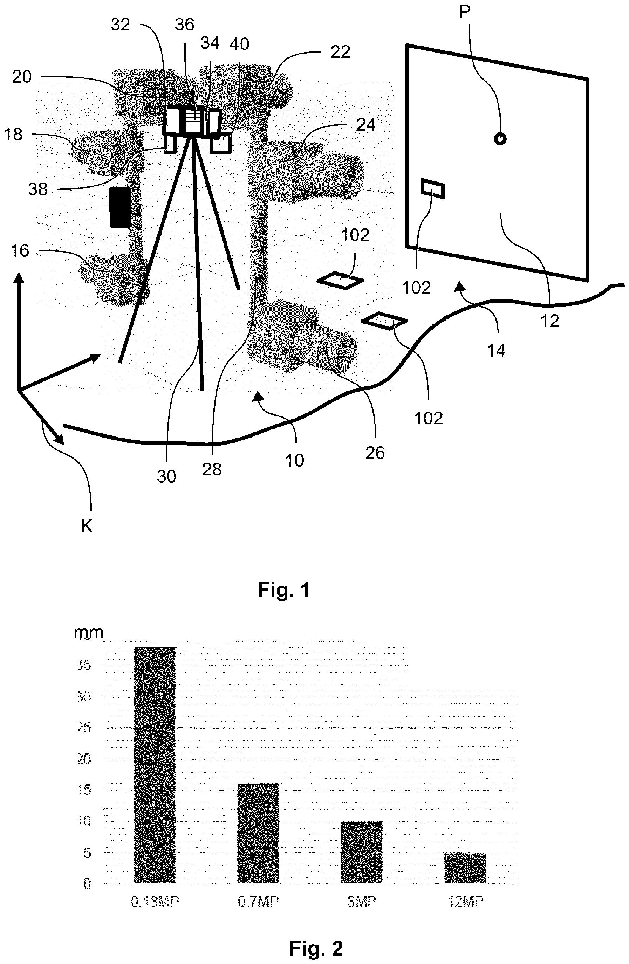

**Fig. 1** zeigt in einer schematischen, perspektivischen Darstellung ein Positionsmessgerät **10** zur Messung einer Position **P** eines Objekts **12** auf einer Hochbau-Baustelle **14**. Beispielhaft ist das Objekt 12 eine Wand eines Gebäudes. In das Objekt 12, also die Wand, ist an der Position **P ein** Bohrloch gebohrt. Die Position P ist relativ zu einem Koordinatensystem **K** zu messen. Ist die Position P im Koordinatensystem K bekannt, kann diese Position beispielsweise mit Planungsdaten eines BIM-Modells (engl., Building Information Model) oder eines CAD-Modells verglichen werden. Auch andere Anwendungen, für die die Position P im Koordinatensystem K bekannt sein sollte, sind denkbar. Um einen Bezug zu dem Koordinatensystem K herstellen zu können, sind auf der Hochbau-Baustelle 14 mehrere Positionsmarkierungen **102** als Eichpunkte des Koordinatensystems K eingemessen und angeordnet.

Das Positionsmessgerät 10 weist sechs Kameras **16, 18, 20, 22, 24, 26** auf. Die Kameras 16, 18, 20, 22, 24, 26 sind jeweils paarweise an einer Halterung **28** angeordnet. Ein Kamerapaar mit den Kameras 16, 18 ist nach links ausgerichtet. Ein Kamerapaar mit den Kameras 20, 22 ist nach vome ausgerichtet. Ein Kamerapaar mit den Kameras 24, 26 ist nach rechts ausgerichtet. Die Kameras weisen zusammen wenigstens 18 MP auf.

Die Kameras 16, 18, 20, 22, 24, 26 sind Graustufenkameras. Denkbar ist, dass die Kameras 16, 18, 20, 22, 24, 26 Farbkameras, beispielsweise eine RGB-Kamera, sind. Wenigstens eine der Kameras 16, 20, 22, 24, 26 kann bei einem weiteren Ausführungsbeispiel ausgebildet sein, Tiefeninformationen aufzunehmen. Sie kann beispielsweise eine Farb- und Tiefeninformationskamera, beispielsweise eine RGBD-Kamera, sein, wodurch besonders präzise Auswertungen von Bildern, insbesondere durch photogrammetrische Methoden und / oder durch SLAM-Algorithmen, möglich sind. Denkbar ist auch, dass sie eine kostengünstigere Graustufen- und Tiefeninformationskamera ist.

Jedes Kamerapaar ist somit jeweils zu wenigstens einem anderen der Kamerapaare um 90 Grad rotiert angeordnet. Somit ist jeweils wenigstens eine der Kameras 16, 18, 20, 22, 24, 26 Um 90 Grad zu wenigstens einer anderen der Kameras 16, 18, 20, 22, 24, 26 rotiert auf der Halterung 28 angeordnet. Alle Kameras 16, 18, 20, 22, 24, 26 sind zudem jeweils voneinander beabstandet.

Jede der Kameras 16, 18, 20, 22, 24, 26 weist ein Autofokus-Objektiv auf. Die Kameras 16, 18, 20, 22, 24, 26 können sich somit selbsttätig scharf stellen. Sie können jeweils ein, insbesondere motorisch, einstellbares Teleobjektiv umfassen. Sie können jeweils wenigstens 3 MP aufweisen. Dazu können sie eine Auflösung von beispielsweise wenigstens 2048 x 1536 Pixeln, insbesondere bei einem Bildverhältnis von 4 zu 3, aufweisen.

Die Halterung 28 sitzt auf einem Stativ **30.** Das Stativ 30 kann höhenverstellbar sein. Das Stativ 30 kann eine Vibrationsdämpfung aufweisen.

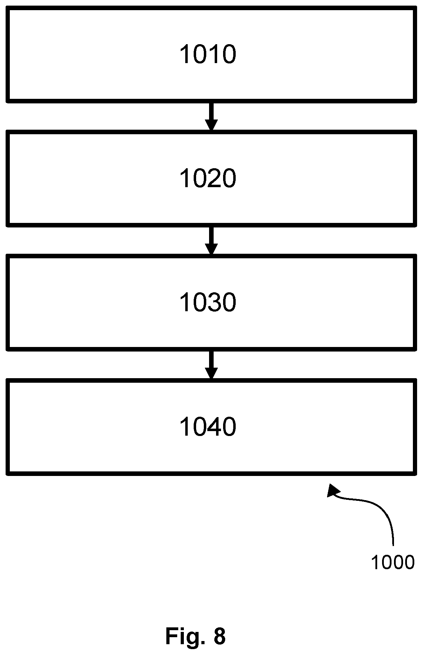

Das Positionsmessgerät 10 weist ferner eine Steuerung **32** auf. Die Steuerung 32 umfasst einen Rechner, beispielsweise ein Tablet PC oder ein Smartphone. Die Steuerung 32 weist insbesondere einen Speicher **34** auf, indem ein Computerprogrammprodukt **36** abrufbar und auf der Steuerung 32 ausführbar abgelegt ist. Das Computerprogrammprodukt 36 ist eingerichtet, mit Hilfe des übrigen Positionsmessgeräts 10 die Position P, insbesondere gemäß dem nachfolgend, insbesondere in Bezug auf Fig. 8, noch näher beschriebenen Verfahren, zu messen.

Die Steuerung 32 weist ferner einen Schwerkraftrichtungssensor **38** sowie einen Beschleunigungssensor **40,** insbesondere zur Detektion von Vibrationen, auf.

Mit Hilfe von Varianten von Positionsmessgeräten 10, in denen systematisch verschiedene Merkmale variiert worden sind, sind umfangreiche eigene Untersuchungen durchgeführt worden.

Insbesondere sind mit solchen Positionsmessgeräten 10 Rundwege mit einer Länge von zirka 80 Metern zurückgelegt worden.

Für diese Untersuchungen umfasste das Computerprogrammprodukt 36 einen SLAM-Algorithmus, beispielsweise ORB-SLAM2 von Raul Mur-Artal et al. oder SVO2.0 von Davide Scaramuzza et al., um relativ zum Ausgangspunkt den mit dem jeweiligen Positionsmessgerät 10 zurückgelegten Weg zu nachzuverfolgen.

Für jeden Versuchsdurchgang wurden quadratisch gemittelte Messfehler bestimmt, also die jeweils quadratisch gemittelte, kumulierte Drift über die gesamte zurückgelegte Strecke hinweg. Zur Bestimmung der Messfehler wurden Vergleichsmessungen mit einer Totalstation durchgeführt.

In einer ersten Versuchsreihe ist untersucht worden, inwieweit die Anzahl von Pixeln der Bildsensoren der Kameras den Messfehler beeinflusst. Dazu sind anstelle der sechs Kameras lediglich zwei Kameras verwendet worden.

**Fig. 2** zeigt in einem Diagramm für verschiedene Anzahlen von Pixeln, angegeben in MP, jeder der zwei verwendeten Kameras, beispielsweise die Kameras 20, 22, den sich jeweils ergebenden quadratisch gemittelten Messfehler, gemessen in mm. Zu erkennen ist, dass bei dieser Zwei-Kamera-Lösung der gesamte Messfehler im Bereich bis 5 mm gehalten werden kann, wenn Kameras mit jeweils wenigstens 12 MP verwendet werden.

Kamerapaare mit jeweils 3 MP führten zu einem quadratisch gemittelten Messfehler von zirka 1 cm. Daraus kann geschlossen werden, dass bei einer auf beispielsweise 40 Meter oder weniger reduzierten Wegstrecke der Messfehler im gewünschten Bereich von höchstens 5 mm erwartet werden kann.

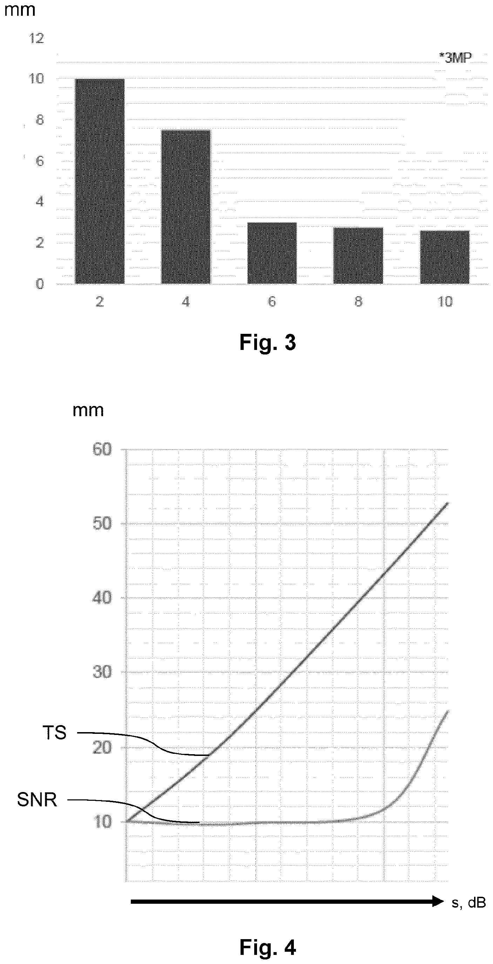

In einer weiteren Versuchsreihe ist untersucht worden, welchen Einfluss die Anzahl der verwendeten Kameras auf den Messfehler hat. Dazu zeigt **Fig. 3** ein Diagramm über quadratisch gemittelte Messfehler, gemessen in mm, in Abhängigkeit von der Anzahl der verwendeten Kameras. Jede der verwendeten Kameras hatte einen Bildsensor mit 3 MP.

Wie im Anschluss an Fig. 2 zu erwarten, ergab sich bei zwei Kameras erneut ein quadratisch gemittelter Messfehler von circa 1 cm.

Überraschenderweise zeigte sich, dass eine Erhöhung der Anzahl der verwendeten Kameras den quadratisch gemittelten Messfehler bis zu einer Anzahl von sechs Kameras erheblich reduziert.

Wird die Anzahl der Kameras jedoch über die Anzahl von sechs Kameras hinaus erhöht, ergeben sich überraschenderweise kaum mehr nennenswerte Verbesserungen. Insbesondere konnte der quadratisch gemittelte Messfehler mit sechs Kameras deutlich unterhalb der erforderlichen Grenze von 5 mm gehalten werden.

Da die Herstellungskosten für ein Positionsmessgerät 10 näherungsweise linear mit der Anzahl der verwendeten Kameras ansteigen, ergibt sich somit ein Optimum im Bereich von ca. Sechs Kameras.

In einer weiteren Serie von Versuchen ist der Einfluss der Bildqualität aufgenommener Bilder auf den Messfehler untersucht worden. Insbesondere wurden Einflüsse der Belichtungsdauer als ein Maß etwaiger Bewegungsunschärfe, sowie der Gesamthelligkeit und damit des Einflusses von Bildrauschen untersucht.

Wie anhand des Diagramms in **Fig. 4** zu erkennen ist, führen verlängerte Belichtungszeiten **TS** bei Bewegung des Positionsmessgeräts 10 entlang des Rundweges zu einem steigenden Maß an Bewegungsunschärfe und damit zu erheblich vergrößerten Messfehlern, gemessen in mm. Bereits eine geringe Bewegungsunschärfe kann den Messfehler verdoppeln, verdreifachen oder sogar darüber hinaus vergrößern.

Dagegen beeinflusst Bildrauschen **SNR,** gemessen als Signal-Rausch-Abstand, beispielsweise in dB, solange es sich unter einem gewissen Schwellwert bewegt, den erzielten Messfehler in nur sehr geringem, vernachlässigbaren Maße.

Im Ergebnis zeigt sich somit, dass Unschärfen in den von den Kameras 16, 18, 20, 22, 24, 26 aufgenommenen Bildern möglichst weitgehend minimiert oder gar vermieden werden sollten.

Die Unschärfen können, auch nach individueller Scharfstellung der Objektive der Kameras 16, 18, 20, 22, 24, 26, durch Bewegungen des Positionsmessgeräts 10 und / oder durch Bewegungen des zu analysierenden Objekts 12 herrühren.

Eigene Bewegungen des Positionsmessgeräts 10 können beispielsweise mit dem Beschleunigungssensor 40 detektiert werden. Denkbar ist beispielsweise, lediglich dann aufgenommene Bilder auszuwerten, wenn keine Vibrationen oder sonstige Bewegungen oder lediglich Vibrationen und / oder sonstige Bewegungen der Kameras 16, 18, 20, 22, 24, 26 unterhalb eines definierten Bewegungsschwellwertes detektiert werden.

Liefert der Beschleunigungssensor 40 Daten über die Bewegung, beispielsweise eine Bewegungsrichtung und / oder eine Bewegungsgeschwindigkeit, ist auch denkbar, wenigstens eines der aufgenommenen Bilder, insbesondere alle aufgenommenen Bilder, hinsichtlich der Bewegung herauszurechnen und damit zu schärfen.

Denkbar ist auch, direkt aus den aufgenommenen Bildern einen Wert für die Bildschärfe zu ermitteln. Dies ist insbesondere für Bildaufnahmen bekannter Objekte, beispielsweise die als Eichmarkierungen dienenden Positionsmarkierungen 102, denkbar.

Bilder, bei denen ein notwendiger Wert der Bildschärfe nicht erreicht wird, können aussortiert und / oder erneut aufgenommen werden. Weitere Analysen können auf diejenigen Bilder beschränkt werden, die eine definierte Mindest-Bildschärfe aufweisen.

Belichtungszeiten können ferner begrenzt werden, um Bewegungsunschärfe zu vermeiden. Die Belichtungszeit für eine Aufnahme eines Bildes kann beispielsweise auf weniger als 1 / 500 s, insbesondere auf weniger als eine Millisekunde, festgelegt werden. Entsprechend den Ergebnissen gemäß Fig. 4 kann dabei gegebenenfalls auch ein (geringfügig) erhöhtes Bildrauschen in Kauf genommen werden.

In einer weiteren Untersuchung ist der Einfluss unterschiedlicher Arten von Positionierungsfehlern der Kameras 16, 18, 20, 22, 24, 26 relativ zueinander verglichen worden.

Hierzu sind Bildaufnahmen der Kameras 16, 18, 20, 22, 24, 26 simuliert worden. Insbesondere sind die in **Fig. 5** gezeigten Fehlerarten Abstandsfehler **AF,** Schielwinkelfehler **SF** und Neigungswinkelfehler **NF** untersucht worden. Abstandsfehler AF entsprechen einer unbeabsichtigten Annäherung oder Distanzierung, also unbeabsichtigten Translationen, einer der Kameras 16, 18, 20, 22, 24, 26 von wenigstens einer der anderen Kameras 16, 18, 20, 22, 24, 26. Schielwinkelfehler SF entsprechen einer unbeabsichtigten Rotationen um die Achse y, sodass die zwei Kameras eines Kamerapaares innerhalb der durch ihre Sichtrichtung und ihre Verbindungslinie aufgespannten Ebene auf zueinander nichtparallele Richtungen ausgerichtet sind. Neigungswinkelfehler NF entsprechen unbeabsichtigten Rotationen um die Achse x, sodass die zwei Kameras eines Kamerapaares durch ihre Sichtrichtungen und ihre Verbindungslinie unterschiedlich ausgerichtete Ebenen aufspannen.

**Fig. 6** zeigt Ergebnisse der Simulationen in einem Diagramm des sich ergebenden Messfehlers in Abhängigkeit vom Ausmaß des jeweiligen Fehlers, gemessen in Pixeln, insbesondere Bruchteilen von Pixeln.

Abstandsfehler AF beeinflussen den sich ergebenden quadratisch gemittelten Messfehler lediglich in geringem Maße.

Der Messfehler wird somit hauptsächlich durch Rotationsfehler beeinflusst.

In annähernd linearer Weise wirken sich Schielwinkelfehler SF aus.

Überraschenderweise hat sich allerdings gezeigt, dass Neigungswinkelfehler NF bis zu einem bestimmten Ausmaß den Messfehler nur geringfügig beeinflussen. Überschreiten jedoch die Neigungswinkelfehler NF einen Schwellwert, so steigt der Messfehler überproportional an.

Bei den Simulationen ergab sich ein Neigungswinkelfehler-Schwellwert von circa 0,3 Pixel, ab denen sich Neigungswinkelfehler NF beträchtlich auswirkten. Eine Erhöhung des Neigungswinkelfehlers NF von 0,3 Pixeln auf 0,5 Pixel führte beispielsweise zu einer Versechsfachung des Fehlers, also der kumulierten Drift.

Für ein Sichtfeld mit einem Sichtwinkel von 90° für eine Kamera, dass in der Vertikalen beispielsweise auf 1536 Pixel abgebildet wird, entspricht ein Fehler von 0,3 Pixel einem Winkelfehler von

$$0,3 \text{ Pixel} \times 90° / 1536 \text{ Pixel} = \text{ca. } 0,018°.$$

Einer der Gründe hierfür kann darin liegen, dass die angewendeten SLAM-Verfahren nur bis zu dem genannten Neigungswinkelfehler-Schwellwert in der Lage sind, zumindest einige der in den Bildern der verschiedenen Kameras 16, 18, 20, 22, 24, 26 enthaltenen Elemente erfolgreich einander zuzuordnen.

Ein besonders vorteilhaftes Positionsmessgerät 10 kann sich daher dadurch auszeichnen, dasss ein Neigungswinkelfehler NF zwischen Kameras 16, 18, 20, 22, 24, 26 wenigstens eines der Kamerapaare höchstens 0,3 Pixel beträgt.

Das Positionsmessgerät 10 kann eingerichtet sein, einen Neigungswinkelfehler NF zwischen wenigstens einem der Kamerapaare selbsttätig zu messen, zu korrigieren und / oder herauszurechnen. Insbesondere kann der Neigungswinkelfehler NF auf höchstens 0,3 Pixel begrenzt sein oder werden. Das kann beispielsweise dadurch erfolgen, dass das Positionsmessgerät 10, insbesondere die Steuerung 32, eingerichtet ist, dass betreffende Kamerapaar, insbesondere alle Kamerapaare, zu kalibrieren.

Die Kalibrierung kann durch Aufnahme von Bildern bekannten Inhalts durch die betreffenden Kameras 16, 18, 20, 22, 24, 26 des jeweiligen Kamerapaars erfolgen. In einer Dimension, in der die beiden Kameras des Kamerapaars nicht zueinander versetzt oder rotiert sein sollten, sollten die Bildaufnahmen identisch liegende Elemente aufweisen. Werden beispielsweise Bilder eines Punktes aufgenommen und sind die beiden Kameras horizontal zueinander versetzt, nicht aber vertikal und sollten die Kameras in der Vertikalen identisch ausgerichtet sein, so müsste der jeweils aufgenommene. Innerhalb des jeweils aufgenommenen Bildes auf derselben vertikalen Position abgebildet sein. Ein entsprechender vertikaler Versatz kann dann in nachfolgend aufgenommenen Bildern herausgerechnet werden. Alternativ oder ergänzend können die Kameras auf der Halterung 28 verstellbar montiert sein. Sie können beispielsweise motorisch verstellbar an der Halterung 28 angeordnet sein. Dann kann auch eine mechanische Korrektur erfolgen, so dass bei einer nachfolgenden Kalibrierung nur noch ein geringerer oder im Idealfall kein Versatz mehr feststellbar ist. Es versteht sich, dass ein solches Korrekturverfahren auch auf andere Dimensionen als die hier beispielhaft erwähnte vertikale Dimension, insbesondere auf eine dazu senkrechte, horizontale Dimension, angewandt werden kann.

Denkbar ist auch, eine solche Kalibrierung, insbesondere eine rechnerische Kompensation und / oder, sofern die benötigten mechanischen Komponenten vorhanden sind, eine mechanische Korrektur, wiederholt durchzuführen.

Wird beispielsweise eine Position einer Positionsmarkierung ausgemessen, wobei das Aussehen der Positionsmarkierung, insbesondere beispielsweise Abmessungen der Positionsmarkierung, exakt bekannt sind, so können Bildaufnahmen der Positionsmarkierung analog zu dem Vorgehen im vorgenannten Beispiel mit einem. Zur Kalibrierung herangezogen werden. Dazu können beispielsweise die als Eichmarkierungen vorgesehenen Positionsmarkierungen 102 verwendet werden. Soweit das Aussehen der jeweiligen Positionsmarkierungen bekannt ist, können auch hierfür andere Positionsmarkierungen anstelle oder zusätzlich zu den Positionsmarkierungen 102 verwendet werden.

Denkbar ist daher, dass das Positionsmessgerät 10 eingerichtet ist, einen Abstandsfehler AF, einen Schielwinkelfehler SF und / oder einen Neigungswinkelfehler NF mit Hilfe von Bildaufnahmen wenigstens zweier der Kameras 16, 18, 20, 22, 24, 26, insbesondere eines Kamerapaares, von wenigstens zwei Objekten, deren Position und vorzugsweise auch deren Erscheinungsbild bekannt ist, beispielsweise wenigstens zwei der als Eichmarkierungen verwendeten Positionsmarkierungen 102, zu korrigieren und / oder zu herauszurechnen.

Dazu kann das Positionsmessgerät 10 eingerichtet sein, die Positionsmarkierung 102 in wenigstens einer Bildaufnahme einer der Kameras 16, 18, 20, 22, 24, 26, insbesondere in mehreren Bildaufnahmen verschiedener der Kameras 16, 18, 20, 22, 24, 26, zu identifizieren.

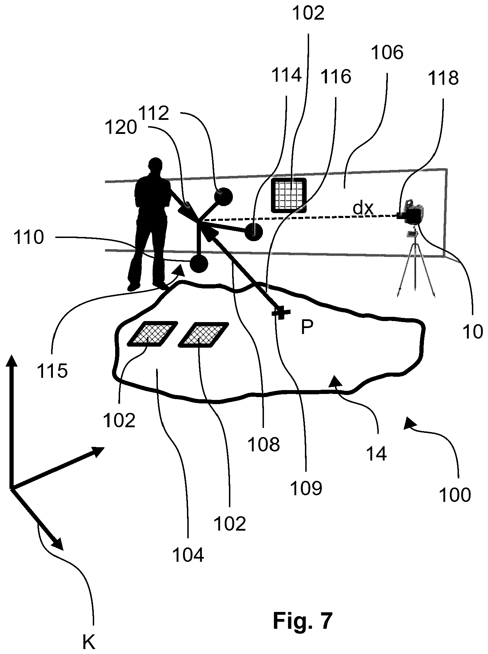

**Fig. 7** zeigt ein Positionsmesssystem **100** auf einer Hochbau-Baustelle 14 mit einem Boden **104** und einer Wand **106.** Das Positionsmesssystem 100 weist ein Positionsmessgerät 10 und einen, insbesondere von einem Benutzer **106** geführten oder zumindest führbaren, Peilstab **108** auf. Das Positionsmessgerät 10 kann, soweit nachfolgend nicht anders beschrieben, einem der vorangehend beschriebenen Positionsmessgeräte 10 entsprechen.

Die Lage und die Position des Peilstabs 108, insbesondere seiner Spitze **109,** und damit der Position P, die von der Spitze 109 kontaktiert wird, können durch das Positionsmesssystem 100 gemessen werden.

Dazu weist der Peilstab 108 drei Positionsmarkierungen **110, 112** und **114** auf. Die Positionsmarkierung 110, 112 und 114 ragen jeweils von einem zentralen Stab **116** des Peilstabs 108 ab. Der Stab 116 sowie die Positionsmarkierungen 110, 112 und 114 können aus einem thermisch gering ausdehnenden Material, beispielsweise aus einem sogenannten "INVAR"-Stahl, ausgebildet sein.

Die relativen Positionen der Positionsmarkierungen 110, 112 und 114 zueinander sowie zum Stab 116 und der Spitze 109 sind bekannt. Die Positionsmarkierungen 110, 112 und 114 spannen insgesamt ein Volumen auf und bilden damit insgesamt eine dreidimensionale Positionsmarkierung **115.** Aus den Positionen der Positionsmarkierungen 110, 112 und 114 lässt sich somit eindeutig auf die Position der Spitze 109 und damit auf die Position P schließen, selbst wenn der Peilstab 108 nicht exakt vertikal ausgerichtet ist.

Das Positionsmessgerät 10 ist eingerichtet, die Positionsmarkierung 102 und 110, 112 und 114 mit Hilfe seiner sechs Kameras 16, 18, 20, 22, 24, 26, insbesondere denjenigen der Kameras 16, 18, 20, 22, 24, 26, deren Sichtfeld die jeweiligen Positionsmarkierungen 110, 112, 114 erfassen, aufzunehmen und die entsprechenden Bilder auszuwerten, um daraus die Position P, beispielsweise photogrammetrisch, zu ermitteln.

Insbesondere können die Kameras 16, 18, 20, 22, 24, 26 des Positionsmessgeräts 10 Bilder der Positionsmarkierungen 110, 112 und 114 aufnehmen. Aus den stereoskopischen beziehungsweise multiskopischen Bildern kann das Positionsmessgerät 10, insbesondere seine Steuerung 32, Positionsmarkierungen 110, 112 und 114 in den aufgenommenen Bildern identifizieren und in den Bildern an den jeweiligen Bildpositionen lokalisieren. Aus den identifizierten Bildpositionen lassen sich die Positionen der Positionsmarkierungen 110, 112, 114 ermitteln. Aus diesen Positionen und unter Berücksichtigung der Geometrie des Stabs 116, insbesondere der relativen Position der Spitze 109, kann dann das Positionsmessgerät 10 die Position der Spitze 109 und damit die Position der Position P berechnen.

Zur Erhöhung der Genauigkeit kann das Positionsmessgerät 10 einen Distanzmesser **118** aufweisen. Der Distanzmesser 118 kann einen Laser umfassen. Insbesondere kann er, vorzugsweise motorisch, verstellbar am Positionsmessgerät 10 angeordnet sein, sodass er z. B. Ein am Stab 116 befindliches Ziel **120,** beispielsweise ein Prisma, anpeilen und gegebenenfalls nachverfolgen kann. Eine vom Distanzmesser 118 gemessene Distanz **dx** des Distanzmessers 118 zum Ziel 120 kann zusätzlich bei der Bestimmung der Position des Punktes P verwendet werden. Die Positionsbestimmungen können insbesondere in Bezug auf ein körpereigenes Koordinatensystem des Positionsmessgeräts 10 erfolgen.

Um die Position P in dem unabhängigen Koordinatensystem K referenzieren und damit beispielsweise mit einem BIM-Modell vergleichen zu können, sind auf der Baustelle 14 mehrere Positionsmarkierungen 102 auf dem Boden 104 und der Wand 106 angeordnet. Sie befinden sich alle im Sichtfeld der Kameras des Positionsmessgeräts 10. Sie sind vorab eingemessen und weisen in Relation zu dem Koordinatensystem K bekannte Koordinaten auf. Die Positionsmarkierungen 102 können somit wiederum als Eichmarkierungen dienen.

Zur Abbildung des körpereigenen Koordinatensystems im Koordinatensystem K können somit wie vorangehend beschrieben, Bilder der Positionsmarkierungen 102 aufgenommen werden und daraus photogrammetrisch die zur Abbildung notwendigen Transformationsdaten ermittelt werden, sodass im Ergebnis die Position P in Koordinaten des Koordinatensystems K bestimmt ist. Auch hierzu kann die Genauigkeit gesteigert werden, in dem die jeweiligen Distanzen des Distanzmessers 118 zu den Positionsmarkierungen 102 mit Hilfe des Distanzmessers 118 gemessen und bei der Berechnung der Transformationsdaten mitberücksichtigt werden.

Bei einem weiteren Ausführungsbeispiel können ein oder mehrere der Positionsmarkierungen 110, 112, 114 und / oder 102 auch als aktive Positionsmarkierungen ausgebildet sein. Sie können insbesondere selbsttätig Lichtsignale aussenden. Die Lichtsignale können kodiert sein. Beispielsweise können die Lichtsignale gepulst mit einer oder mehreren bestimmten Frequenzen sein.

Die Kameras 16, 18, 20, 22, 24, 26 des Positionsmessgeräts 10 können Bildserien aufnehmen.

Aus den Bildserien können insbesondere zur Verbesserung des Störabstandes und zur Verminderung von Bildrauschen die von den aktiven Positionsmarkierungen erzeugten Lichtpunkte anhand deren Kodierung gefiltert werden. Die gefilterten Bilder können dann zur Positionsbestimmung der Position P herangezogen werden.

Bei einem weiteren Ausführungsbeispiel kann vorgesehen sein, mit Hilfe einer oder mehrerer der Positionsmarkierungen 102, 110, 112, 114 und vorzugsweise auch den jeweiligen Distanzen zu den jeweiligen Positionsmarkierungen, wenigstens einen Neigungswinkelfehler wenigstens eines Kamerapaars zu kalibrieren, insbesondere zu messen, zu korrigieren und / oder herauszurechnen.

Die Kalibrierung kann beispielsweise im Falle aktiver Positionsmarkierungen 102 bei Kenntnis der tatsächlichen relativen Positionen und Lagen der Positionsmarkierungen 102 erfolgen, in dem diese tatsächlichen relativen Positionen und Lagen verglichen werden mit den anhand der aufgenommenen Bilder gemessenen relativen Positionen und Lagen und zusätzlich durch Abgleich mit den durch den Distanzmesser 118 direkt gemessenen Distanzen. Sind die Kameras des zu kalibrierenden Kamerapaars motorisch verstellbar, so können diese beispielsweise so lange um deren Ache y (siehe Fig. 5) verstellt werden, Abweichungen der relativen Positionen und Lagen zueinander und im Vergleich mit den direkt gemessenen Distanzen bis auf ein Minimum reduziert sind. Analog kann die Kalibrierung auch anhand der bekannten Geometrie der dreidimensionalen Positionsmarkierung 115 und deren relative Position und Lage zum Ziel 120 sowie der Distanz dx erfolgen.

Anstelle oder ergänzend zu einer mechanischen Verstellung von Kameras können auch die von den Kameras aufgenommenen Bilder entsprechend einer Korrekturabbildung rechnerisch versetzt und / oder verzerrt werden, bis eine rechnerische Korrekturabbildung ermittelt ist, bei der die Abweichungen ebenfalls bis auf ein Minimum reduziert sind.

Eine solche Kalibrierung kann wiederholt durchgeführt werden. Beispielsweise kann die Kalibrierung laufend, z. B. Mit jeder Positionsbestimmung der Position P, also mit jeder Bestimmung der Positionen der Positionsmarkierungen 110, 112, 114 erfolgen.

Insbesondere kann wenigstens ein Bildfehler gemessen und / oder herausgerechnet werden. Besonders bevorzugt ist es, wenn ein Neigungswinkelfehler zwischen Kameras wenigstens eines der Kamera Paare ermittelt, korrigiert und / oder herausgerechnet wird.

**Fig. 8** zeigt ein Ablaufdiagramm eines Verfahrens **1000,** das ebenfalls die Aufgabe löst.

Das Verfahren 1000 wird zur Erleichterung des Verständnisses unter Verwendung der vorangehend eingeführten Bezugszeichen im Folgenden erläutert. Als Beispiel wird eine der Fig. 1 vergleichbare Situation herangezogen, bei der das Verfahren 1000 ausgeführt wird.

Insbesondere ist das Verfahren 1000 ein Verfahren zur Messung einer Position P eines Objekts 12 auf einer Baustelle 14, beispielsweise einer Hochbau-Baustelle oder einer Tiefbau-Baustelle, mit einem Positionsmesssystem 100 der vorangehend beschriebenen Art.

In einer Phase **1010** werden vom Positionsmessgerät 10 unter Verwendung seiner sechs Kameras 16, 18, 20, 22, 24, 26 mit ihren insgesamt wenigstens 18 MP Bilder aufgenommen, wobei wenigstens zwei der aufgenommenen Bilder die zu bestimmende Position P enthalten und wenigstens zwei andere oder dieselben Bilder wenigstens eine der als Eichmarkierungen dienenden Positionsmarkierungen 102, insbesondere alle Positionsmarkierungen 102, enthalten. Gegebenenfalls wird dazu das Positionsmessgerät 10 geeignet auf der Baustelle 14 positioniert.

In einer Phase **1020,** also vor der eigentlichen Messung der Position (P), wird wenigstens ein Neigungswinkelfehler NF anhand von Bildern von Kameras eines Kamerapaares, die beispielsweise eine der als Eichmarkierungen ausgebildeten Positionsmarkierungen 102 und / oder einer anderen, eindeutig identifizierbaren Bildposition innerhalb des Sichtfeldes des Kamerapaares erfassen, zunächst gemessen. Bei anschließenden Bildverarbeitungsschritten wird dann der in Pixeln oder Bruchteilen von Pixeln ermittelte Neigungswinkelfehler selbsttätig korrigiert und / oder herausgerechnet. Insbesondere wird er durch die Maßnahmen auf höchstens 0,3 Pixel begrenzt. Der Neigungswinkelfehler NF kann beispielsweise nachfolgend durch rechnerischen Versatz der Bilder zueinander entsprechend des Grades des Neigungswinkelfehlers NF herausgerechnet werden. Alternativ oder ergänzend kann vorgesehen sein, dass wenigstens eine der Kameras 16, 18, 20, 22, 24 bzw. 26 eines Kamerapaars drehbar, insbesondere motorisch drehbar, um die Achse x angeordnet ist. Somit besteht eine Möglichkeit, den Neigungswinkelfehler NF selbsttätig zu kompensieren darin, dass die drehbar angeordnete Kamera 16, 18, 20, 22, 24, 26 bzw. 26 entsprechend dem ermittelten Neigungswinkelfehler NF um die Achse x zum Ausgleich des Neigungswinkelfehlers NF gedreht wird.

In einer Phase **1030** wird eine Schärfe für jedes der auszuwertenden Bilder ermittelt. Unterschreitet die Schärfe einen bestimmten Schärfe-Schwellwert, so wird erneut das entsprechende Bild aufgenommen. Nach einer bestimmten Anzahl von Fehlversuchen, d. h. wenn trotz Wiederholungen der Schärfe-Schwellwert nicht erreicht wird, wird das Verfahren 1000 mit einer Fehlermeldung abgebrochen. Anstelle oder ergänzend zur Ermittlung der Schärfe können auch Vibrationen des Positionsmessgeräts 10 erfasst und mit einem Vibrations-Schwellwert in analoger Weise verglichen werden und gegebenenfalls Bildaufnahmen wiederholt werden oder das Verfahren 1000 nach mehreren erfolglosen Wiederholungen mit einer Fehlermeldung abgebrochen werden.

Mit den nun vorliegenden Bildern wird in einer Phase **1040** die Position wenigstens eine Position einer der als Eichmarkierung in Bezug auf ein Koordinatensystem (K) definierten Positionsmarkierung (102) beispielsweise photogrammetrisch und / oder unter Verwendung eines SLAM-Algorithmus, unter Berücksichtigung der Geometrien des Positionsmessgeräts 10, insbesondere der relativen Positionen und Lagen der Kameras 16, 18, 20, 22, 24, 26 zueinander, bestimmt.

Anschließend wird in analoger Weise die Position P aus den vorliegenden Bildern bestimmt.

Anhand der Positionen im Koordinatensystem K der Positionsmarkierungen 102 sowie deren Positionen in den Bildern wird die Position P in Koordinaten des Koordinatensystems K umgerechnet.

Weitere Varianten des Verfahrens 1000 ergeben sich durch Berücksichtigung von einer oder mehrerer der Ausgestaltungsmöglichkeiten wie sie im Zusammenhang mit den vorangehenden Fig. 1 bis 7 beschrieben worden sind.

Weitere Merkmale und Vorteile der Erfindung ergeben sich aus der vorangehenden Beschreibung von Ausführungsbeispielen der Erfindung, anhand der Figuren der Zeichnung, die erfindungswesentliche Einzelheiten zeigt, sowie aus den Ansprüchen. Die in der Zeichnung gezeigten Merkmale sind dabei nicht notwendig maßstäblich zu verstehen und derart dargestellt, dass die Besonderheiten deutlich sichtbar gemacht werden können. Die verschiedenen Merkmale können je einzeln für sich oder zu mehreren in beliebigen Kombinationen bei Varianten der Erfindung verwirklicht sein.

## Bezugszeichenliste

| | |
|---|---|
| 10 | Positionsmessgerät |
| 12 | Objekt |
| 14 | Baustelle |
| 16 | Kamera |
| 18 | Kamera |
| 20 | Kamera |
| 22 | Kamera |
| 24 | Kamera |
| 26 | Kamera |
| 28 | Halterung |
| 30 | Stativ |
| 32 | Steuerung |
| 34 | Speicher |
| 36 | Computerprogrammprodukt |
| 38 | Schwerkraftrichtungssensor |
| 40 | Beschleunigungssensor |
| 100 | Positionsmesssystem |
| 102 | Positionsmarkierung |
| 104 | Boden |
| 106 | Wand |
| 106 | Benutzer |
| 108 | Peilstab |
| 109 | Spitze |
| 110 | Positionsmarkierung |
| 112 | Positionsmarkierung |
| 114 | Positionsmarkierung |
| 115 | dreidimensionale Positionsmarkierung |
| 116 | Stab |
| 118 | Distanzmesser |
| 120 | Ziel |
| 1000 | Verfahrens |
| 1010 | Phase |
| 1020 | Phase |
| 1030 | Phase |
| 1040 | Phase |
| AF | Abstandsfehler |
| dx | Distanz |
| K | Koordinatensystem |
| NF | Neigungswinkelfehler |
| P | Position |

SF      Schielwinkelfehler
SNR   Bildrauschen
TS     Belichtungszeiten
x       x-Achse
y       y-Achse

**Patentansprüche**

1. **Positionsmessgerät (10)** zur Messung einer Position (P) eines Objekts (12) auf einer Baustelle (14), beispielsweise einer Hochbau-Baustelle oder einer Tiefbau-Baustelle, umfassend wenigstens ein Kamera (16, 18, 20, 22, 24, 26), **dadurch gekennzeichnet, dass** das Positionsmessgerät (10) wenigstens ein Kamerapaar aus wenigstens zwei Kameras (16, 18, 20, 22, 24, 26) aufweist, und wobei es eingerichtet ist, einen Neigungswinkelfehler (NF) zwischen Kameras (16, 18, 20, 22, 24, 26) wenigstens eines Kamerapaars selbsttätig zu korrigieren und / oder herauszurechnen, insbesondere auf höchstens 0,3 Pixel zu begrenzen.

2. Positionsmessgerät (10) nach dem vorhergehenden Anspruch, **dadurch gekennzeichnet, dass** wenigstens eine der Kameras (16, 18, 20, 22, 24, 26) um 90° zu wenigstens einer anderen der Kameras (16, 18, 20, 22, 24, 26) rotiert angeordnet ist.

3. Positionsmessgerät (10) nach einem der vorhergehenden Ansprüche, **dadurch gekennzeichnet, dass** wenigstens zwei der Kameras (16, 18, 20, 22, 24, 26) in einem Kamerapaar nach vorne, zwei der Kameras (16, 18, 20, 22, 24, 26) in einem Kamerapaar nach rechts und zwei der Kameras (16, 18, 20, 22, 24, 26) in einem Kamerapaar nach links ausgerichtet sind.

4. Positionsmessgerät (10) nach einem der vorhergehenden Ansprüche, **dadurch gekennzeichnet, dass** ein Neigungswinkelfehler (NF) zwischen Kameras (16, 18, 20, 22, 24, 26) wenigstens eines der Kamerapaare höchstens 0,3 Pixel beträgt.

5. Positionsmessgerät (10) nach einem der vorhergehenden Ansprüche, **dadurch gekennzeichnet, dass** das Positionsmessgerät (10) wenigstens sechs voneinander beabstandete Kameras (16, 18, 20, 22, 24, 26) aufweist, wobei die Kameras (16, 18, 20, 22, 24, 26) insgesamt wenigstens 18 MP aufweisen, wobei das Positionsmessgerät (10) eingerichtet ist, durch Auswerten von Bildern der wenigstens sechs Kameras (16, 18, 20, 22, 24, 26) die Position (P) des Objekts (12) zu bestimmen.

6. Positionsmessgerät (10) nach einem der vorhergehenden Ansprüche, **dadurch gekennzeichnet, dass** das Positionsmessgerät (10) einen Neigungssensor, beispielsweise eine Libelle und / oder einen Schwerkraftrichtungssensor (38), aufweist.

7. Positionsmessgerät (10) nach einem der vorhergehenden Ansprüche, **dadurch gekennzeichnet, dass** das Positionsmessgerät (10) einen Bewegungssensor und / oder einen Vibrationssensor aufweist.

8. **Positionsmesssystem (100),** umfassend ein Positionsmessgerät (10) nach einem der vorhergehenden Ansprüche und einen Peilstab (108), auf dem eine Positionsmarkierung (102) angeordnet und / oder ausgebildet ist.

9. **Verfahren (1000)** zur Messung einer Position (P) eines Objekts (12) auf einer Baustelle (14), beispielsweise einer Hochbau-Baustelle oder einer Tiefbau-Baustelle, mit einem Positionsmesssystem (100) nach einem der vorhergehenden Ansprüche, wobei ein Neigungswinkelfehler (NF) zwischen Kameras (16, 18, 20, 22, 24, 26) wenigstens eines Kamerapaars selbsttätig korrigiert und / oder herausgerechnet wird, insbesondere auf höchstens 0,3 Pixel begrenzt wird.

10. Verfahren nach dem vorherigen Anspruch, **dadurch gekennzeichnet, dass** Bilder von insgesamt wenigstens sechs Kameras (16, 18, 20, 22, 24, 26) ausgewertet werden, wobei die Kameras (16, 18, 20, 22, 24, 26) insgesamt wenigstens 18 MP aufweisen.

11. Verfahren nach einem der beiden vorhergehenden Patentansprüche, **dadurch gekennzeichnet, dass** eine Schärfe oder Unschärfe, insbesondere eine bewegungsbedingte Unschärfe, in wenigstens einem Bild der Kameras (16, 18, 20, 22, 24, 26) ermittelt wird, und abhängig von der Schärfe oder Unschärfe

    - das Bild bei der Messung der Position (P) des Objekts (12) verwendet wird,
    - das Bild bei der Messung der Position (P) des Objekts (12) nicht verwendet wird, insbesondere wenn die Schärfe einen Schwellwert erreicht oder unterschreitet oder die Unschärfe einen Schwellwert erreicht oder überschreitet, und / oder
    - die Schärfe des Bildes vor einer weiteren Verwendung korrigiert wird.

12. Verfahren nach einem der Ansprüche 9 bis 12, **dadurch gekennzeichnet, dass** detektiert wird, ob das Positionsmessgerät (10) und / oder die Positionsmarkierung (102), insbesondere über einen Vibrations-Schwellwert hinaus, vibrieren und / oder sich bewegen.

13. Verfahren nach einem der Ansprüche 9 bis 13, **da-**

**durch gekennzeichnet, dass** zusätzlich zur Bestimmung der Position (P) wenigstens eine Position (P) einer als Eichmarkierung in Bezug auf ein Koordinatensystem (K) definierten Positionsmarkierung (102) bestimmt wird.

14. Auf einem Speichermedium gespeichertes **Computerprogrammprodukt (36),** dass eingerichtet ist, bei Ausführung auf einer Steuerung (32) eines Positionsmessgeräts (10) nach einem der Ansprüche 1 bis 8 das Verfahren (1000) nach einem der Ansprüche 9 bis 14 auszuführen.

**Fig. 1**

**Fig. 2**

mm

**Fig. 3**

mm

**Fig. 4**

**Fig. 5**

**Fig. 6**

**Fig. 7**

```
┌─────────────────────────────────┐
│                                 │
│             1010                │
│                                 │
└─────────────────────────────────┘
                 │
                 ▼
┌─────────────────────────────────┐
│                                 │
│             1020                │
│                                 │
└─────────────────────────────────┘
                 │
                 ▼
┌─────────────────────────────────┐
│                                 │
│             1030                │
│                                 │
└─────────────────────────────────┘
                 │
                 ▼
┌─────────────────────────────────┐
│                                 │
│             1040                │
│                                 │
└─────────────────────────────────┘
                                1000
```

**Fig. 8**

Europäisches Patentamt
European Patent Office
Office européen des brevets

## EUROPÄISCHER RECHERCHENBERICHT

Nummer der Anmeldung

EP 23 21 8531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 104453 A1 (FUJI HEAVY IND LTD [JP]) 1. Oktober 2015 (2015-10-01) | 1,4,6,7, 9,12-14 | INV. G01C15/00 |
| A | * Absätze [0033] - [0037], [0044], [0045]; Abbildung 1 * | 2,3,5,8, 10,11 | E02F9/26 G06T7/80 |
| | - - - - - | | G06V20/56 |
| X | DE 10 2021 214441 A1 (BOSCH GMBH ROBERT [DE]) 15. Juni 2023 (2023-06-15) | 1,2,4-7, 9,10, 12-14 | |
| A | * Absätze [0016], [0023] - [0025], [0028]; Anspruch 1; Abbildung 1A * | 3,8,11 | |
| | - - - - - | | |
| X | EP 3 385 458 A1 (KOMATSU MFG CO LTD [JP]) 10. Oktober 2018 (2018-10-10) | 1,2,4-7, 9,10, 12-14 | |
| A | * Absätze [0046], [0076], [0078], [0130]; Abbildungen 8, 14 * | 3,8,11 | |
| | - - - - - | | |

**RECHERCHIERTE SACHGEBIETE (IPC)**

G01C
E02F
G06V
G06T

Der vorliegende Recherchenbericht wurde für alle Patentansprüche erstellt

| Recherchenort | Abschlußdatum der Recherche | Prüfer |
|---|---|---|
| Den Haag | 31. Mai 2024 | Kuhn, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes Dokument

EPO FORM 1503 03.82 (P04C03)

EP 4 575 394 A1

**ANHANG ZUM EUROPÄISCHEN RECHERCHENBERICHT
ÜBER DIE EUROPÄISCHE PATENTANMELDUNG NR.**    EP 23 21 8531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2024

| Im Recherchenbericht angeführtes Patentdokument | Datum der Veröffentlichung | Mitglied(er) der Patentfamilie | Datum der Veröffentlichung |
|---|---|---|---|
| DE 102015104453 A1 | 01-10-2015 | CN 104949619 A | 30-09-2015 |
| | | DE 102015104453 A1 | 01-10-2015 |
| | | JP 5906272 B2 | 20-04-2016 |
| | | JP 2015190921 A | 02-11-2015 |
| | | US 2015279017 A1 | 01-10-2015 |
| DE 102021214441 A1 | 15-06-2023 | KEINE | |
| EP 3385458 A1 | 10-10-2018 | CN 108633293 A | 09-10-2018 |
| | | EP 3385458 A1 | 10-10-2018 |
| | | JP 6346375 B1 | 20-06-2018 |
| | | JP WO2018146782 A1 | 14-02-2019 |
| | | US 2018370432 A1 | 27-12-2018 |
| | | WO 2018146782 A1 | 16-08-2018 |

Für nähere Einzelheiten zu diesem Anhang : siehe Amtsblatt des Europäischen Patentamts, Nr.12/82